# EUROPEAN PATENT SPECIFICATION

(11) **EP 3 754 578 B1**
(45) Date of publication and mention of the grant of the patent: **31.07.2024**
(21) Application number: 19772272.1
(22) Date of filing: 22.02.2019
(51) Int. Cl.: G06Q 20/06, G06Q 20/08, G06Q 20/42, G06Q 40/00, G06Q 20/10

(54) **BLOCKCHAIN-BASED SETTLEMENT METHOD, BLOCKCHAIN NODE AND CLIENT**
BLOCKCHAIN-BASIERTES SETTLEMENT-VERFAHREN, BLOCKCHAIN-KNOTEN UND CLIENT
PROCÉDÉ DE RÈGLEMENT À BASE DE CHAÎNE DE BLOCS, NOEUD DE CHAÎNE DE BLOCS ET CLIENT

(30) Priority: 20.03.2018 CN 201810230085
(43) Date of publication of application: 23.12.2020
(73) Proprietor: HUAWEI TECHNOLOGIES CO., LTD., Shenzhen, Guangdong 518129 (CN)
(72) Inventor: JIANG, Zhenyu, Shenzhen, Guangdong 518129 (CN); JIANG, Yaoguo, Shenzhen, Guangdong 518129 (CN)
(74) Representative: Gill Jennings & Every LLP
(86) International application number: PCT/CN2019/075766
(87) International publication number: WO 2019/179278

(56) References cited:
- CN-A- 107 392 610
- CN-A- 107 423 973
- CN-A- 108 292 397
- US-A1- 2017 243 217
- KLEMS MARKUS ET AL: "Trustless Intermediation in Blockchain-Based Decentralized Service Marketplaces", 18 October 2017, BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, ISBN: 978-3-642-17318-9, XP047453043

## Description

### TECHNICAL FIELD

This application relates to the blockchain field, and in particular, to a blockchain-based settlement method, a blockchain node, and a client.

### BACKGROUND

An operator usually cooperates with a partner to provide a product, a service, a marketing activity, and the like for customers. Fees paid by the customers are allocated to the operator and the partner according to a settlement agreement.

In the prior art, after a customer uses a service, an operator's network generates an original call detail record to record the customer's usage. A partner may generate an original call detail record or may have no usage record about a customer. Original call detail records of the operator and the partner are not shared with each other. At the end of a billing cycle, a value distribution & settlement (VDS, value distribution & settlement) system of the operator generates a settlement call detail record through settlement processing based on the original call detail record recorded by the operator, and outputs a bill data accumulation result. If the partner side has an original call detail record, the partner also outputs a settlement call detail record and a bill data accumulation result based on the original call detail record recorded by itself, and transmits the settlement call detail record and the bill data accumulation result to the VDS system of the operator for reconciliation. If there is no reconciliation dispute, the operator sends a formal settlement bill to each partner related to the service.

In an existing settlement scheme, settlement is performed based on an original call detail record of an operator. Therefore, a partner that has no original call detail record can receive, only at the end of a billing cycle, a settlement bill including a final bill data accumulation result and sent by the operator; and a partner that has recorded an original call detail record performs reconciliation based on its own original call detail record and a bill data accumulation result sent by the operator. The original call detail record of the operator is confidential to all partners. As massive call detail record data is usually generated in a billing cycle, it is relatively difficult to perform backtracking and reconciliation in case of a dispute.

Background to the invention also includes blockchain-based decentralized service marketplaces, such as described in MARKUS ET AL: "Trustless Intermediation in Blockchain-Based Decentralized Service Marketplaces", DOI: 10.1007/978-3-319-69035-3_53. Additional background may be found in patent publications CN 107423973, CN 107392610, CN 108292397 and US 2017/243217.

### SUMMARY

Embodiments of this application provide a blockchain-based settlement method, to implement open and real-time settlement.

A first aspect of the embodiments of this application provides a blockchain-based settlement method as set out in claim 1.

The blockchain-based settlement method provided in the embodiments of this application implements sharing of an original call detail record and real-time reconciliation on a settlement result, thereby avoiding a prior-art problem that it is difficult to perform backtracking and reconciliation during settlement at the end of a billing cycle.

Based on the first aspect of the embodiments of this application, in a first implementation of the first aspect of the embodiments of this application, the method further includes: synchronizing, by the first blockchain node, a second original call detail record released by the second blockchain node.

In the blockchain-based settlement method provided in the embodiments of this application, considering that some settlement participants also have original call detail records, the second blockchain node may also synchronize a second original call detail record to the blockchain, thereby improving implementation flexibility of the solution.

A second aspect of the embodiments of this application provides a blockchain-based settlement method as set out in claim 2.

In the settlement method provided in the embodiments of this application, the second blockchain node may receive an original call detail record and a settlement result from the first blockchain node, and perform real-time reconciliation on the settlement result according to the smart contract, where a confirmed settlement result is stored in the blockchain node. During the settlement, the second blockchain node may send bill data to a second client. The settlement process implements original call detail record sharing and real-time reconciliation, and is open and transparent, thereby avoiding a dispute during settlement by transferring accounts at the end of a billing cycle.

Based on the second aspect of the embodiments of this application, in a first implementation of the second aspect of the embodiments of this application, the determining, by the second blockchain node, whether a result calculated according to the smart contract is consistent with the first settlement result includes: processing, by the second blockchain node, the first original call detail record according to the smart contract to obtain a second settlement result; determining, by the second blockchain node, whether the second settlement result is consistent with the first settlement result; and if the second settlement result is consistent with the first settlement result, triggering the second blockchain node to return a first confirmation message to the first blockchain node, where the first confirmation message carries information that reconciliation on the second settlement result succeeds.

In the blockchain-based settlement method provided in the embodiments of this application, the second blockchain node processes the first original call detail record according to the smart contract; and a specific reconciliation manner is provided. Therefore, in actual application, implementability of the solution is improved.

Based on the second aspect of the embodiments of this application, in a second implementation of the second aspect of the embodiments of this application, after the receiving and synchronizing, by the second blockchain node, the smart contract released by the first blockchain node, the method further includes:
receiving, by the second blockchain node, a second original call detail record sent by the second client, and synchronizing the second original call detail record to the blockchain.

In the blockchain-based settlement method provided in the embodiments of this application, considering that the second client may also have an original call detail record, the second blockchain node may synchronize a second original bill to the blockchain, thereby improving implementation flexibility of the solution.

Based on the second implementation of the second aspect of the embodiments of this application, in a third implementation of the second aspect of the embodiments of this application, the determining, by the second blockchain node, whether a result calculated according to the smart contract is consistent with the first settlement result includes: processing, by the second blockchain node, the second original call detail record according to the smart contract to obtain a third settlement result; determining, by the second blockchain node, whether the third settlement result is consistent with the first settlement result; and if the third settlement result is consistent with the first settlement result, triggering the second blockchain node to return a first confirmation message to the first blockchain node, where the first confirmation message carries information that reconciliation on the first settlement result succeeds.

In the blockchain-based settlement method provided in the embodiments of this application, the second blockchain node processes the second original call detail record according to the smart contract; and another specific reconciliation manner is provided. Therefore, in actual application, implementation flexibility of the solution is improved.

A third aspect of the embodiments of this application provides a blockchain node, where the blockchain node has a function of implementing the blockchain-based settlement methods in the first aspect or the second aspect. The function may be implemented by hardware, or may be implemented by hardware by executing corresponding software. The hardware or the software includes one or more modules corresponding to the foregoing function.

A fourth aspect of the embodiments of this application provides a computer program product, where the computer program product includes a computer software instruction. The computer software instruction may be loaded by a processor to implement a procedure of the method in the first aspect or the second aspect.

A fifth aspect of the embodiments of this application provides a computer storage medium, configured to store a computer software instruction, where the computer software instruction includes programs used for performing steps in various implementations provided in the first or the second aspect of the embodiments of this application.

### BRIEF DESCRIPTION OF DRAWINGS

FIG. 1 is an architecture diagram of a multi-party settlement system for an operator and partners;
FIG. 2 is an interaction flowchart of multi-party settlement between an operator and partners;
FIG. 3 is a system architecture diagram of a blockchain-based settlement method according to an embodiment of this application;
FIG. 4 is a system topology diagram of a blockchain-based settlement method according to an embodiment of this application;
FIG. 5 is a schematic diagram of an embodiment of a blockchain-based settlement method according to an embodiment of this application;
FIG. 6 is a schematic diagram of another embodiment of a blockchain-based settlement method according to an embodiment of this application;
FIG. 7 is a schematic diagram of another embodiment of a blockchain-based settlement method according to an embodiment of this application;
FIG. 8 is a schematic diagram of another embodiment of a blockchain-based settlement method according to an embodiment of this application;
FIG. 9A and FIG. 9B are an interaction flowchart of an embodiment of a blockchain-based settlement method according to an embodiment of this application;
FIG. 10 is a schematic diagram of an embodiment of a blockchain node according to an embodiment of this application;
FIG. 11 is a schematic diagram of an embodiment of a blockchain client according to an embodiment of this application;
FIG. 12 is a schematic diagram of another embodiment of a blockchain node according to an embodiment of this application;
FIG. 13 is a schematic diagram of another embodiment of a blockchain client according to an embodiment of this application;
FIG. 14 is a schematic diagram of another embodiment of a blockchain node according to an embodiment of this application; and
FIG. 15 is a schematic diagram of another embodiment of a blockchain client according to an embodiment of this application.

### DESCRIPTION OF EMBODIMENTS

In actual life, there are many settlement scenarios, for example, settlement between an operator and a partner. An operator cooperates with one or more partners to launch a product, a service, or a marketing activity to customers. Usually, multi-party settlement is performed according to a proportional share policy. For example, for a video traffic package service to be provided for customers, an operator needs to cooperate with a content provider (CP, content provider) and a distributor. The CP is responsible for providing video content, and the distributor is responsible for service promotion. When a customer plays a video, a generated fee needs to be shared and settled among the operator, the CP, and the distributor. During settlement between an operator and a partner, the operator is a settlement initiator, and the partner is a settlement participant.

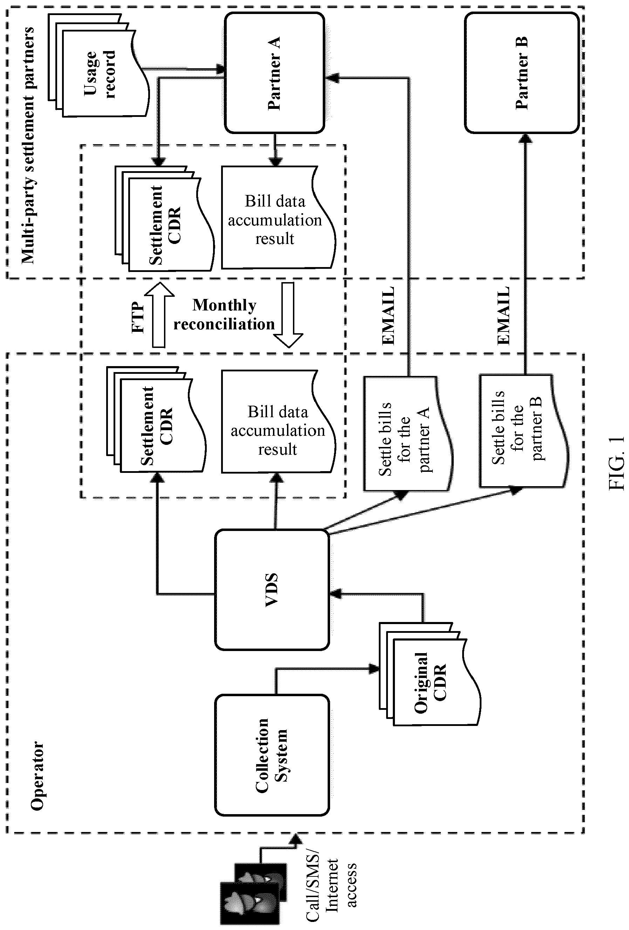

FIG. 1 is an architecture diagram of a settlement system for an operator and partners.

A collection system of the operator may collect information about service usage of a customer and generate an original call detail record. A value distribution & settlement (VDS, value distribution & settlement) system provides partner management, product management, account settlement and billing, payment, and other capabilities, and is an end-to-end B2B business and operation support system. The VDS system may process an original call detail record to generate a settlement call detail record, may perform reconciliation with a partner to obtain a bill data accumulation result, and may further send a settlement bill to each partner by email. On a partner side, some partners have usage records of customers, and some partners may have no records.

As shown in FIG. 1, a customer uses, by calling, sending an SMS message, or accessing the Internet, a service provided by the operator; and the network collection system of the operator generates an original call detail record. For example, during three-party settlement between the operator and two partners, when the customer plays a video, a traffic call detail record is generated on the operator side. A partner A (for example, a CP) has a usage record, and a partner B (for example, a distributor) has no record.

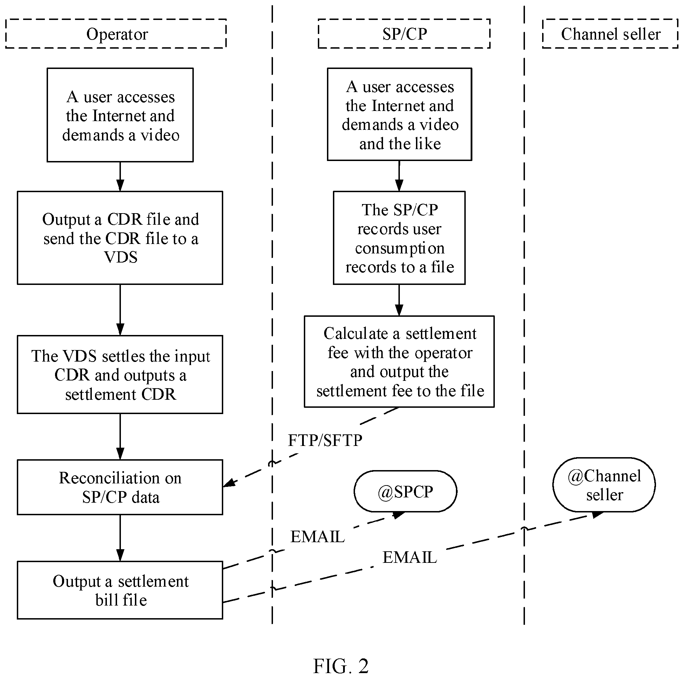

Based on the architecture diagram of the settlement system in FIG. 1, FIG. 2 is an interaction flowchart of a settlement process between an operator and partners.

When a user accesses the Internet to play a video, the collection system of the operator outputs a call detail record file to the VDS system of the operator; the VDS system performs settlement processing based on an original call detail record and outputs a settlement call detail record after the processing, where the settlement call detail record includes information such as usage, a charge rate, and settlement fees. A settlement cycle for the operator and the partners is a billing cycle, and is usually determined on a monthly basis. At the end of a billing cycle, fees generated by all call detail records are accumulated, and a bill data accumulation result is output. In addition, a partner side that has a usage record also outputs a settlement call detail record and a bill data accumulation result, and transmits the settlement call detail record and the bill data accumulation result to the VDS system of the operator for reconciliation at the end of the billing cycle. If results of the reconciliation are consistent with each other, the operator outputs a formal settlement bill to a related partner.

In an existing settlement scheme, settlement is performed according to an original call detail record of an operator. Therefore, a partner can receive, only at the end of a billing cycle, a settlement bill including a final bill data accumulation result and sent by the operator; and the original call detail record of the operator and a settlement rule are both confidential to the partner. As massive call detail record data is usually generated in a billing cycle, it is relatively difficult to perform backtracking and reconciliation in case of a dispute.

A settlement method provided in embodiments of this application is based on a blockchain technology, and the blockchain technology is briefly described below.

The blockchain technology uses a distributed database that has characteristics of decentralization, tamper-proof performance, scalability, and the like. In a blockchain system, all data is stored in a block, and newly written data forms a new block and is added to an end of a current blockchain. In addition to data, each block further stores a number uniquely corresponding to all recorded data in a previous block. The number is usually a hash value of all the data. If a person attempts to modify data in a current block separately, a number stored in a next block cannot correspond to the data, and a chain cannot be formed. Therefore, the blockchain system may be considered as a system in which computers that do not trust each other completely in a distributed network jointly maintain, according to an agreed rule, a set of traceable chain data that cannot be tampered with. Since data and a platform are not controlled unilaterally by any mechanism, the blockchain system may be regarded as a trusted and decentralized basic computing framework with high security and reliability. Technical solutions provided in the embodiments of this application are created based on the blockchain technology.

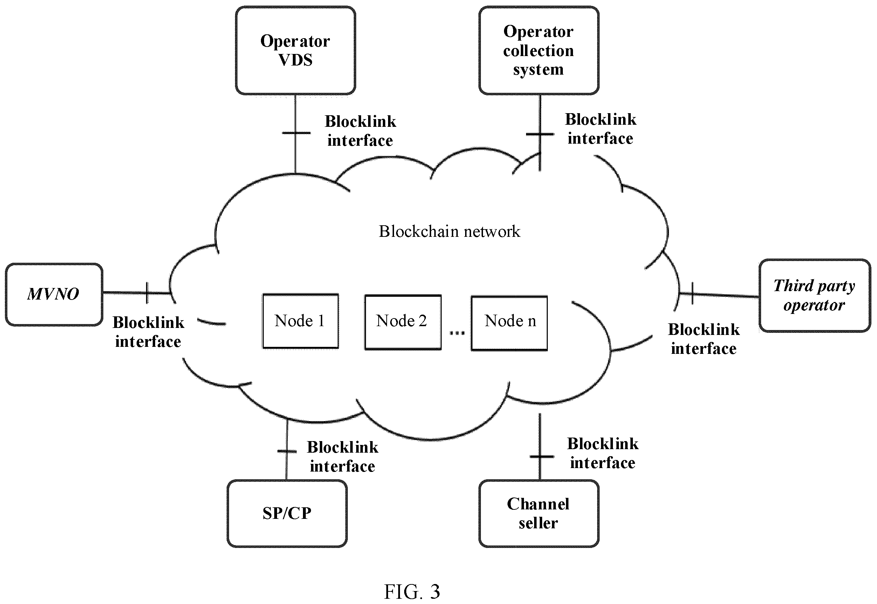

FIG. 3 is an architecture diagram of a blockchain network according to an embodiment of this application.

A settlement initiator and a settlement participant jointly establish a settlement blockchain network, and each settlement party accesses the blockchain network. Each settlement party is a blockchain client, and the client is mainly responsible for event initiation, service logic execution, and the like. A client as a settlement initiator may be a VDS system or a collection system of an operator. The settlement participant may be a mobile virtual network operator (MVNO, mobile virtual network operator), a third-party operator, a content provider (CP, content provider), a service provider (SP, service provider), a distributor, or the like. Clients access the blockchain network through their respective blockchain interfaces. There are a plurality of nodes in a blockchain, and a client may write or read data through a node.

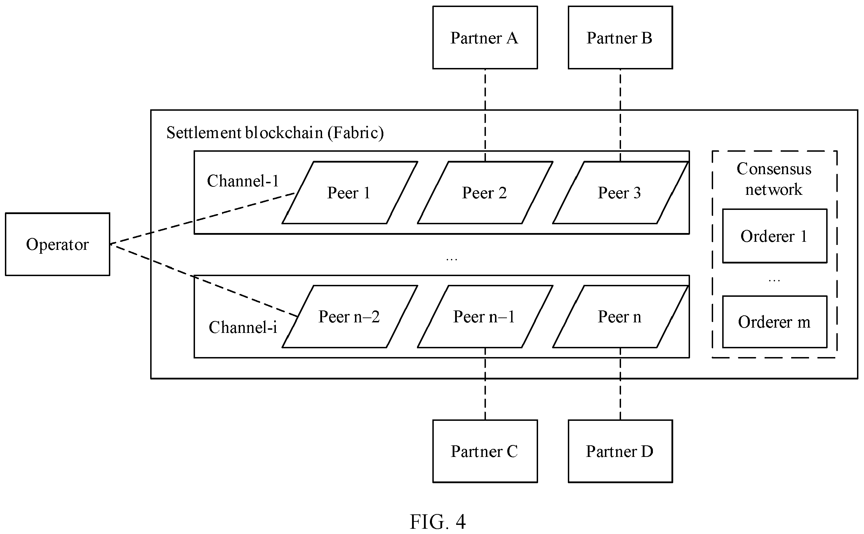

FIG. 4 is a system topology diagram according to an embodiment of this application.

In the topology diagram, an operator and various partners all use blockchain clients and have their own blockchain nodes (Peer) in a blockchain network. A peer is a node for maintaining data in the blockchain, and an orderer node provides a consensus service. A main function of consensus is to allow all peer nodes in the blockchain to record same valid content of transaction blocks. When there are a plurality of settlement groups, a channel (Channel) of a fabric blockchain may be used to differentiate the multi-party settlement groups. The channel provides a communications mechanism to connect related peers or orderers together to form virtual confidential communications links. One peer may belong to a plurality of channels. As shown in the figure, the operator, a partner A, and a partner B belong to a channel-1, and the operator, a partner C, and a partner D belong to a channel-2. Different multi-party settlement groups may form different block subchains, and data isolation can be implemented between the different subchains.

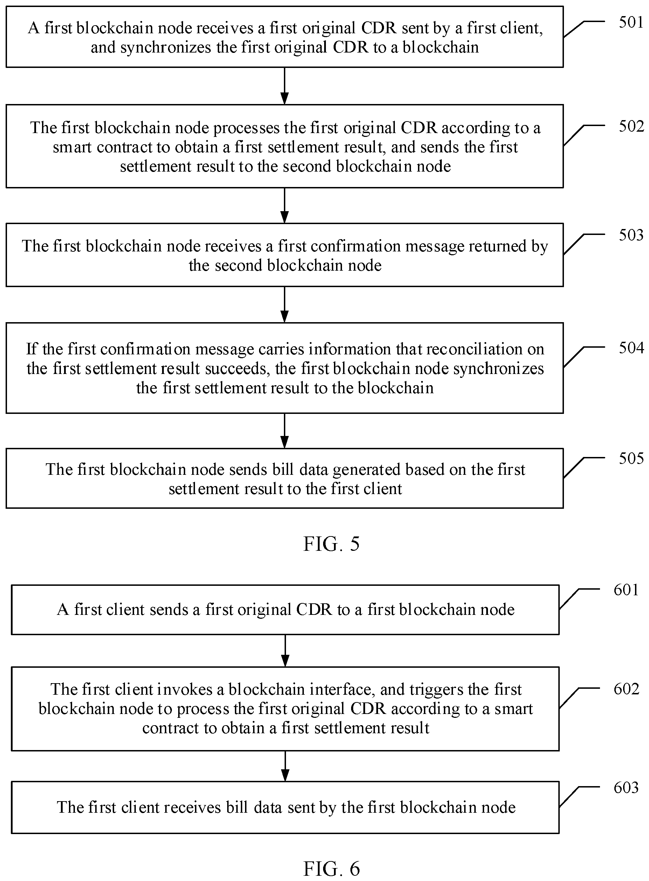

In system architectures of the blockchain networks provided in FIG. 3 and FIG. 4, settlement parties of a settlement service jointly establish a settlement blockchain. The settlement parties include a settlement initiator and a settlement participant. The settlement parties have their own clients, and a client is connected to a corresponding blockchain node in the blockchain network through a blockchain interface. Based on the architectures of the foregoing blockchain systems, FIG. 5 is a schematic diagram of an embodiment of a blockchain-based settlement method according to an embodiment of this application.

A first client is a client of a settlement initiator, and may be a VDS system or a collection system of an operator. A subject of a client of the operator is not specifically limited in this embodiment and the following embodiments of this application.

A second client is a client of a settlement participant, and the settlement participant may be an MVNO, a third-party operator, a CP, a service SP, a distributor, or the like. The second client is a participant of a settlement service. There may be one or more second clients in a settlement service. A subject of the second client and a quantity of second clients are not specifically limited in this embodiment and the following embodiments of this application.

501. A first blockchain node receives a first original call detail record sent by a first client, and synchronizes the first original call detail record to the blockchain.

The first client sends the recorded first original call detail record to the first blockchain node. After receiving the first original call detail record, the first blockchain node synchronizes the first original call detail record to the settlement blockchain. To be specific, a second blockchain node receives and stores the first original call detail record.

502. The first blockchain node processes the first original call detail record according to a smart contract to obtain a first settlement result, and sends the first settlement result to the second blockchain node.

The first client invokes a blockchain interface, and triggers the first blockchain node to process the first original call detail record according to the smart contract, to obtain the first settlement result. The smart contract is generated based on a settlement agreement. The first original call detail record may include one piece of call detail record information, or may include a preset quantity of pieces of call detail record information. A specific quantity of call detail records is not limited herein. The first blockchain node sends the first settlement result to the second blockchain node.

503. The first blockchain node receives a first confirmation message returned by the second blockchain node.

After receiving the first settlement result sent by the first blockchain node, the second blockchain node performs reconciliation on the first settlement result according to the smart contract, and returns the first confirmation message carrying a reconciliation result. The first blockchain node receives the first confirmation message returned by the second blockchain node. The first confirmation message is used to indicate the result of reconciliation performed by the second blockchain node according to the smart contract and based on the first original call detail record.

504. If the first confirmation message carries information that reconciliation on the first settlement result succeeds, the first blockchain node synchronizes the first settlement result to the blockchain.

The second blockchain node performs reconciliation on the first settlement result according to the smart contract. If a settlement result obtained by the second blockchain node is consistent with the first settlement result, a returned confirmation message carries information that reconciliation on the first settlement result succeeds; or if a settlement result obtained by the second blockchain node is inconsistent with the first settlement result, a returned confirmation message carries information that reconciliation on the first settlement result fails. After receiving the first confirmation message, the first blockchain node determines whether the first confirmation message carries information that reconciliation on the first settlement result succeeds. If the first confirmation message carries information that reconciliation on the first settlement result succeeds, the first blockchain node synchronizes the first settlement result to the blockchain. The second blockchain node in the blockchain may receive and store the first settlement result.

505. The first blockchain node sends bill data generated based on the first settlement result to the first client.

After synchronizing the first settlement result to the blockchain, the first blockchain node may update cumulative bill data. The first blockchain node may send bill data to the first client at a preset time point, for example, at the end of a billing cycle, or when the first client invokes the bill data. The first client may perform settlement by transferring accounts based on the bill data.

In the blockchain-based settlement method provided in this embodiment of this application, the first blockchain node receives an original call detail record sent by the first client and synchronizes the original call detail record to the blockchain, and a settlement participant can obtain the original call detail record; and the first blockchain node processes the original call detail record according to the smart contract, and sends an obtained settlement result to the second blockchain node for real-time reconciliation. A confirmed settlement result is synchronized to the blockchain. In this case, during settlement at the end of a billing cycle, the first blockchain node sends bill data to the first client, so that settlement by transferring accounts may be performed. The settlement method based on blockchain technology provided in this embodiment of this application implements sharing of original call detail record and real-time reconciliation on a settlement result, thereby avoiding a prior-art problem that it is difficult to perform backtracking and reconciliation during settlement at the end of a billing cycle.

The foregoing describes a technical solution for a blockchain node of a technology initiator in the blockchain-based settlement method. The first blockchain node is connected to the first client through a blockchain interface, and the first client is a settlement initiator. FIG. 6 is a schematic diagram of another embodiment of a blockchain-based settlement method according to an embodiment of this application.

601. A first client sends a first original call detail record to a first blockchain node.

After a service is generated, the first client generates an original call detail record including a transaction record. The first original call detail record may be one original call detail record record, or may be a plurality of preset original call detail record records, for example, 10 or 100 original call detail record records. A quantity of original call detail record records included in the first original call detail record is not specifically limited herein. The first client sends the first original call detail record to the first blockchain node. In this case, the first blockchain node may synchronize the first original call detail record to a blockchain, to implement original call detail record sharing.

602. The first client invokes a blockchain interface, and triggers the first blockchain node to process the first original call detail record according to a smart contract to obtain a first settlement result.

The first client invokes a first blockchain interface, and may trigger the first blockchain node to process the first original call detail record according to the smart contract. The smart contract is generated based on a settlement agreement, and the settlement agreement stipulates a settlement rule on which settlement parties need to reach consensus in a settlement service. The first blockchain node calculates the first settlement result according to the smart contract, and sends the settlement result to a second blockchain node.

603. The first client receives bill data sent by the first blockchain node.

After each blockchain node performs confirmation on a settlement result, the first blockchain node records the settlement result, updates cumulative bill data in a bill in the blockchain, and synchronizes updated cumulative bill data to the second blockchain node. At the end of a billing cycle or when the first client invokes bill data, the first client receives bill data sent by the first blockchain node.

The first settlement result is confirmed by the second blockchain node. Therefore, bill data obtained through accumulation based on the first settlement result can be directly used for settlement without undergoing reconciliation.

In the settlement method provided in this embodiment of this application, the first client sends an original call detail record to a settlement participant through the blockchain interface. In this way, the original call detail record is shared by all settlement parties, and the settlement participant can perform real-time reconciliation, thereby avoiding a dispute at the end of a billing cycle.

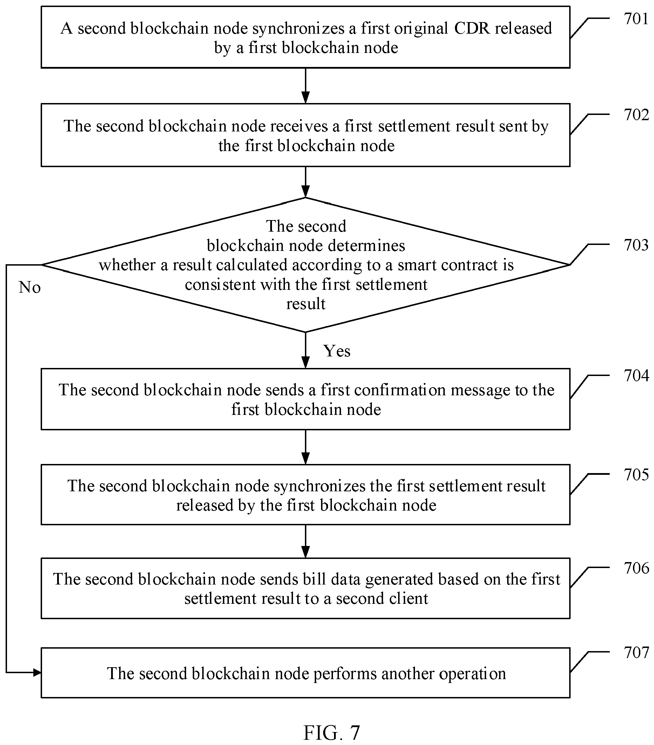

The foregoing describes the technical solution for a settlement initiator and a blockchain node thereof in the blockchain-based settlement method, and the following describes a technical solution for a second blockchain node of a settlement participant. FIG. 7 is a schematic diagram of another embodiment of a blockchain-based settlement method according to an embodiment of this application.

701. A second blockchain node synchronizes a first original call detail record released by a first blockchain node.

As a settlement initiator, the first blockchain node generates a related transaction record, that is, the first original call detail record. The first original call detail record may be one original call detail record record, or may be a plurality of preset original call detail record records, for example, 10 or 100 original call detail record records. A quantity of original call detail record records included in the first original call detail record is not specifically limited herein. The second blockchain node receives and stores the first original call detail record released by the first blockchain node. The second blockchain node is a node of a settlement participant in a blockchain.

702. The second blockchain node receives a first settlement result sent by the first blockchain node.

After calculating the first settlement result according to a smart contract, the first blockchain node sends the first settlement result to the second blockchain node for reconciliation.

703. The second blockchain node determines whether a result calculated according to a smart contract is consistent with the first settlement result; and if the result calculated according to the smart contract is consistent with the first settlement result, performs step 704; or if the result calculated according to the smart contract is inconsistent with the first settlement result, performs step 707.

After receiving the first settlement result sent by the first blockchain node, the second blockchain node performs calculation on an original call detail record according to the smart contract to obtain a settlement result. Then the second blockchain node performs reconciliation to determine whether the result is consistent with the first settlement result.

704. The second blockchain node sends a first confirmation message to the first blockchain node.

If the second blockchain node determines that the result calculated according to the smart contract is consistent with the first settlement result, that is, reconciliation succeeds, the second blockchain node returns the first confirmation message to the first blockchain node. The first confirmation message carries information that reconciliation succeeds.

705. The second blockchain node synchronizes the first settlement result released by the first blockchain node.

After receiving the confirmation message and determining that reconciliation on the first settlement result succeeds, the first blockchain node releases the first settlement result. The second blockchain node receives and stores the first settlement result released by the first blockchain node.

706. The second blockchain node sends bill data generated based on the first settlement result to a second client.

The second blockchain node synchronizes cumulative bill data released by the first blockchain node, and sends, to the second client at the end of a billing cycle or at a preset time point, bill data generated based on a settlement result or bill data generated through accumulation based on a settlement result. In this case, the second client may perform settlement by transferring accounts based on the settlement result.

707. The second blockchain node performs another operation.

If the second blockchain node determines that the result calculated according to the smart contract is inconsistent with the first settlement result, the second blockchain node performs another operation. The another operation may be sending a message to the first blockchain node. The message carries a message that reconciliation fails. The operation performed by the second blockchain node is not specifically limited herein.

In the settlement method provided in this embodiment of this application, the second blockchain node may receive an original call detail record and a settlement result from the first blockchain node, and perform real-time reconciliation on the settlement result according to the smart contract, where a confirmed settlement result is stored in a blockchain node. During the settlement, the second blockchain node may send bill data to the second client. The settlement process implements sharing of an original call detail record and a settlement rule and real-time reconciliation, and is open and transparent, thereby avoiding a dispute during settlement by transferring accounts at the end of a billing cycle.

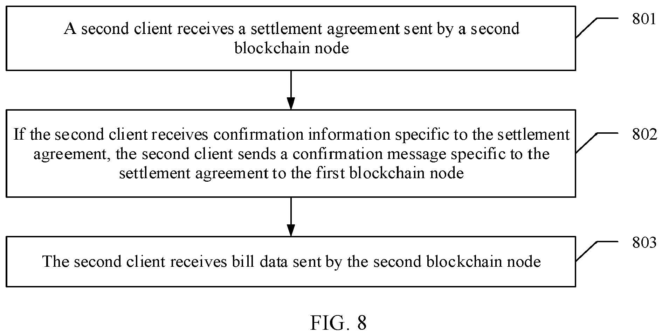

The foregoing describes the technical solution for the second blockchain node in the settlement method. The second blockchain node is connected to the second client through a blockchain interface in a blockchain, and the second client is a client of a settlement participant. FIG. 8 is a schematic diagram of another embodiment of a blockchain-based settlement method according to an embodiment of this application.

801. A second client receives a settlement agreement sent by a second blockchain node.

The second client receives the settlement agreement sent by the second blockchain node. The settlement agreement is a rule that settlement parties need to jointly follow in a settlement service. Content of the settlement agreement includes a charging policy of customer consumption such as charge rate information and a currency unit, and a sharing proportion of settlement parties. The content of the settlement agreement is determined based on an actual case of a settlement service, and is not specifically limited herein.

802. If the second client receives confirmation information for the settlement agreement, the second client sends a confirmation message for the settlement agreement to the second blockchain node.

The second client may receive a user's confirmation on the content of the settlement agreement. If there is no objection to the content, the second client may send, to the second blockchain node, a confirmation message carrying information that there is no objection to the content. If there is an objection to the content, the second client may add an objection to a confirmation message, and perform confirmation again after a first blockchain node performs dispute handling. The confirmed settlement agreement is used to generate a smart contract.

803. The second client receives bill data sent by the second blockchain node.

The second blockchain node receives and stores a settlement result released by the first blockchain node. At the end of a billing cycle or at a preset time point, the second blockchain node generates bill data based on the settlement result and sends the bill data to the second client. The second client receives the bill data sent by the second blockchain node and performs settlement by transferring accounts based on the bill data.

This embodiment of this application provides a blockchain-based settlement method. The second client confirms a settlement agreement, and performs settlement according to a smart contract generated based on the settlement agreement. The second client that has a settlement-related transaction record may upload an original call detail record generated by itself to a blockchain node to perform reconciliation on a settlement result, and feeds back a reconciliation result in real time. The settlement result having undergone reconciliation is sent from the second blockchain node to the second client in a form of bill data during the settlement. The second client not only can perform confirmation on a settlement rule, but also can perform reconciliation on a settlement result obtained based on the original call detail record recorded by itself. The settlement process is open and transparent, and real-time reconciliation can be performed.

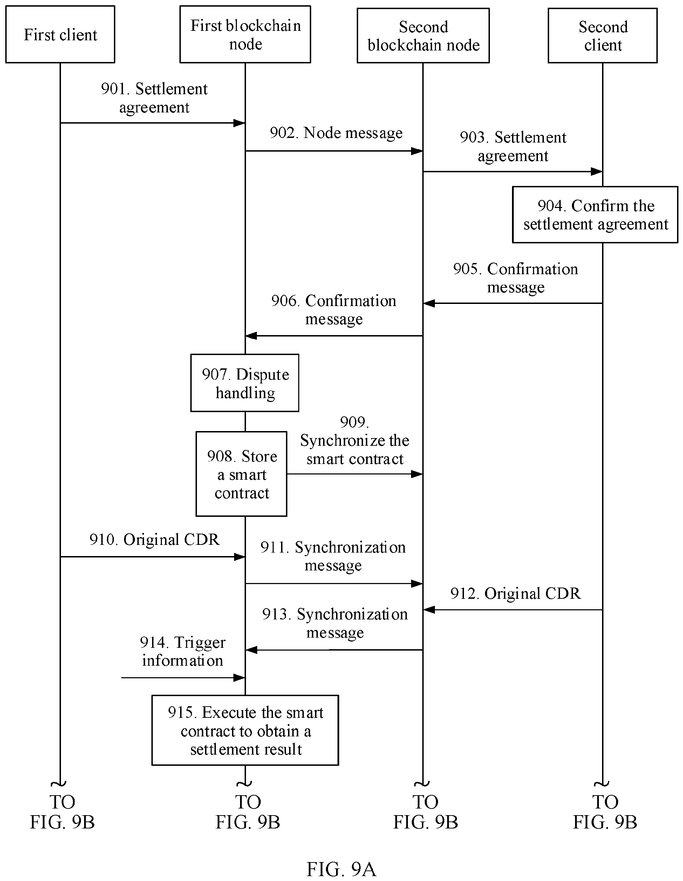

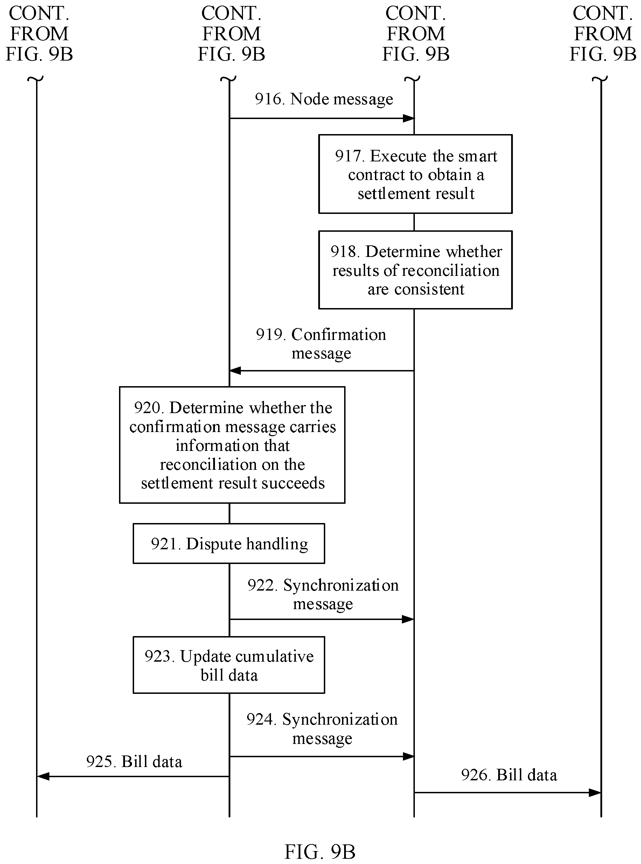

The foregoing describes settlement schemes for clients of settlement parties and blockchain nodes. In the following, FIG. 9 is an interaction flowchart of an embodiment of a blockchain-based settlement method according to an embodiment of this application.

901. A first client sends a settlement agreement to a first blockchain node.

Subjects of a settlement activity include the first client of a settlement initiator and a second client of a settlement participant. The clients are connected to their respective blockchain nodes through their respective blockchain interfaces, to form a blockchain network. First, the first client initiates release of the settlement agreement, and sends the settlement agreement to the first blockchain node.

902. The first blockchain node sends a node message to a second blockchain node.

The first client sends the settlement agreement to the first blockchain node, and the first blockchain node sends the node message. Content of the message includes a charging policy of customer consumption such as charge rate information and a currency unit, and a sharing proportion of settlement parties. The content of the message may be adjusted based on an actual case, and is not specifically limited herein. A message format may be as follows:

```
          {channel: channel-1,
          data: {
          user_rate = 1
          user_rate_measurement_unit = 10 M
          currency _code= RMB
          currency_unit= yuan
          rule "settlement_rule"
               when
          partner_code == "A"
               then
          settlement_fee = user_rate * user_usage * 0.4
               when
          partner_code == "B"
               then
          settlement_fee = user_rate * user_usage *(1 - 0.4)* 0.2
          end
          }
          }
```

A channel (Channel) in a blockchain is used to differentiate multi-party settlement groups. A "data" part represents content of a smart contract, where "user_rate" represents a user rate, "user_rate_measurement_unit" represents a user rate measurement unit, "currency_code" represents a currency code, "currency_unit" represents a currency unit, "rule" represents a rule, "partner_code" represents a partner code, and "settlement_fee" represents a settlement fee. It can be understood that the foregoing message format is only an example of a message format, and a specific form of the message format is not limited herein.

The first blockchain node digitally signs the message before sending the message. In this embodiment of this application, each blockchain node may digitally sign a message before sending the message. An operation of adding a digital signature is a basic step of sending a node message in a blockchain technology. Details are not further described in the following content in this embodiment.

903. The second blockchain node sends a settlement agreement to a second client.

After receiving the node message carrying content of the settlement agreement, the second blockchain node performs signature verification on the message. After receiving a node message, a blockchain node performs signature verification on the message. Any node in the blockchain technology signs a message before sending the message to another node, and performs signature verification on a message after receiving the message. This is a basic operation of a node in the blockchain technology. Details are not further described in the following content in this embodiment.

904. The second client confirms the settlement agreement.

After receiving the settlement agreement sent by the second blockchain node, the second client may confirm the content of the settlement agreement or obtain confirmation information input by a user. The settlement agreement is a rule that settlement parties need to jointly follow in a settlement service. If the second client or the user has no objection to the content of the settlement agreement, the second client may send, to the second blockchain node, a confirmation message carrying information that there is no objection to the content. If the second client or the user has an objection to the content of the settlement agreement, the second client may add objection information to a confirmation message, and perform confirmation again after the first blockchain node performs dispute handling. The confirmed settlement agreement is used to generate a smart contract.

905. The second client sends a confirmation message to the second blockchain node.

The second client confirms the content of the settlement agreement in step 904. If confirming that there is no objection to the content, the second client sends a confirmation message carrying information that there is no objection to the content. If confirming that there is an objection to the content, the second client sends a confirmation message carrying objection information.

906. The second blockchain node sends a confirmation message to the first blockchain node.

The confirmation message is sent by the second blockchain node to the first blockchain node.

After the first blockchain node receives the confirmation message sent by the second blockchain node, if the confirmation message carries objection information, the first blockchain node performs step 907; or if the confirmation message carries information that there is no objection to the content, the first blockchain node performs step 908.

907. The first blockchain node performs dispute handling.

If the confirmation message sent by the second blockchain node and received by the first blockchain node carries objection information, the first blockchain node performs dispute handling. The dispute handling may be modifying the settlement agreement, sending the objection information to the first client for processing, or resending a settlement agreement after confirmation of the settlement agreement. A specific manner of dispute handling is not limited herein. After performing dispute handling, the first blockchain node reinitiates release of a smart contract, that is, performs steps 902 to 906.

908. The first blockchain stores a smart contract.

If the confirmation message sent by the second blockchain node and received by the first blockchain node carries information that there is no objection to the content, the first blockchain node stores the smart contract.

909. The first blockchain node synchronizes the smart contract to the second blockchain node.

If the confirmation message sent by the second blockchain node and received by the first blockchain node carries information that there is no objection to the content, the first blockchain node synchronizes the smart contract to the second blockchain node, and the second blockchain node receives and stores the smart contract.

It should be noted that there is no specific execution sequence between steps 908 and 909. Step 908 may be performed before step 909, or step 909 may be performed before step 908.

910. The first client sends an original call detail record to the first blockchain node.

After a service is generated, the first client generates an original call detail record including a transaction record. The original call detail record is a consumption record of a user, and may include a subscriber number, a start time, an end time, usage, and so on, which are of calling, sending an SMS message, or accessing the Internet, and the like. A format of the original call detail record may be: {channel: channel-1, data: {user: X, start-time: 20181217121205, end-time: 20181217121305, data-usage: 10 MB}}. "Channel" represents a multi-party settlement group. "data" represents specific call detail record content, where "user" represents a user, "start-time" represents a start time point, "end-time" represents an end time point, and "data-usage" represents data usage. A first original call detail record may be one original call detail record record, or may be a plurality of preset original call detail record records, for example, 10 or 100 original call detail record records. Content, a format, and a call detail record quantity of the first original call detail record are not specifically limited herein. The first client sends the first original call detail record to the first blockchain node.

911. The first blockchain node sends a synchronization message to the second blockchain node.

The first blockchain node sends, to the second blockchain node by using the synchronization message, the original call detail record sent by the first client in step 910. The second blockchain node receives and stores the original call detail record, thereby implementing sharing of the original call detail record of the first client.

912. The second client sends an original call detail record to the second blockchain node.

After a service is generated, some second client sides that have transaction records also generate original call detail records. The original call detail record is a consumption record of a user, and may include a subscriber number, a start time, an end time, and data usage of calling, sending an SMS message, or accessing the Internet, and the like. A format of the original call detail record may be: {channel: channel-1, data: {user: X, start-time: 20181217121205, endtime: 20181217121305, data-usage: 10 MB}}. "Channel" represents a multi-party settlement group. "data" represents specific call detail record content, where "user" represents a user, "start-time" represents a start time point, "end-time" represents an end time point, and "data-usage" represents data usage. A second original call detail record may be one original call detail record record, or may be a plurality of preset original call detail record records, for example, 10 or 100 original call detail record records. Content, a format, and a call detail record quantity of the second original call detail record are not specifically limited herein. The second client sends the second original call detail record to the second blockchain node.

913. The second blockchain node sends a synchronization message to the first blockchain node.

The second blockchain node sends, to the first blockchain node by using the synchronization message, the original call detail record sent by the second client in step 912.

It should be noted that if the second client has no transaction record, steps 912 and 913 are not performed.

It should be noted that an execution sequence between steps 910 and 911 and steps 912 and 913 is not limited. Steps 910 and 911 may be performed before steps 912 and 913, or steps 912 and 913 may be performed before steps 910 and 911. The execution sequence is not specifically limited herein.

914. Trigger the first blockchain node.

When the first client invokes a blockchain interface or a preset time point arrives, the first blockchain node is triggered to process the original call detail record according to the smart contract.

915. The first blockchain node executes the smart contract to obtain a settlement result.

When being triggered by the first client or triggered by another condition, the first blockchain node may execute the smart contract, and perform calculation on the original call detail record according to a settlement rule agreed according to the smart contract to obtain a settlement result.

916. The first blockchain node sends a node message to the second blockchain node.

After obtaining the settlement result in step 915, the first blockchain node sends the node message to the second blockchain node. Content of the message includes the original call detail record and the settlement result.

The content of the message may be: {channel: channel-1, operator: {origin-record: {user: A, start-time: 20181217121205, endtime: 20181217121305, data-usage: 10 MB}, result-record: {charge-amount: 1}}.

"Channel" represents a multi-party settlement group, "operator" represents an operation, "origin-record" represents an original record, "start-time" represents a start time, "end-time" represents an end time, "data-usage" represents data usage, "result-record" represents a result record, and "charge-amount" represents a charge amount.

It can be understood that the content of the message may be determined based on an actual case, and specific content is not limited herein.

917. The second blockchain node executes the smart contract to obtain a settlement result.

If the second client has a transaction record, after receiving the node message, the second blockchain node may match, based content of the original call detail record, for example, origin-record, an original call detail record recorded by the second client, and then perform calculation according to the smart contract to obtain a settlement result.

If the second client has no transaction record, after receiving the node message, the second blockchain node may obtain an original call detail record recorded by the first client, and perform calculation according to the smart contract to obtain a settlement result. A specific manner of executing the smart contract by the second blockchain node is not limited herein.

918. The second blockchain node determines whether results of reconciliation are consistent with each other.

The second blockchain node determines whether the result calculated according to the smart contract is consistent with the settlement result sent by the first blockchain.

919. The second blockchain node sends a confirmation message to the first blockchain node.

The second blockchain node adds reconciliation information to a confirmation message based on a determining result in step 918.

If the second blockchain node determines that the result calculated according to the smart contract is consistent with the settlement result sent by the first blockchain, the second blockchain node returns a confirmation message carrying information that results of reconciliation are consistent with each other.

For example, {channel: channel-1, operator: {origin-record: {user: A, start-time: 20181217121205, endtime: 20181217121305, data-usage: 10 MB}, result-record: {charge-amount: 1}}, partnerA: {confirmation-result: yes} }.

"Channel" represents a multi-party settlement group, "operator" represents an operation, "origin-record" represents an original record, "user" represents a user, "start-time" represents a start time point, "end-time" represents an end time point, "data-usage" represents data usage, "result-record" represents a result record, "charge-amount" represents a charge amount, "partnerA" represents a partner A, and "confirmation-result" represents a confirmation result. When a value of the confirmation result is "yes", it indicates that results of reconciliation are consistent with each other.

If the second blockchain node determines that the result calculated according to the smart contract is inconsistent with the settlement result sent by the first blockchain, the second blockchain node returns a confirmation message carrying information that results of reconciliation are inconsistent with each other.

For example, {channel: channel-1, operator: {origin-record: {user:A, start-time: 20181217121205, endtime:20181217121305, data-usage: 10 MB}, result-record: {charge-amount: 1}}, partnerA: {origin-record: {user:A, start-time: 20181217121205, endtime:20181217121305, data-usage: 20 MB}, result-record: {charge-amount: 2 } , confirmation-result: no } }.

"Channel" represents a multi-party settlement group, "operator" represents an operation, "origin-record" represents an original record, "user" represents a user, "start-time" represents a start time point, "end-time" represents an end time point, "data-usage" represents data usage, "result-record" represents a result record, "charge-amount" represents a charge amount, "partnerA" represents a partner A, and "confirmation-result" represents a confirmation result. When a value of the confirmation result is "no", it indicates that results of reconciliation are inconsistent with each other.

It can be understood that the foregoing confirmation message is only an example, specific content and a message format of the confirmation message may be adjusted based on an actual case, and the specific content and the message format of the confirmation message are not limited herein.

920. The first blockchain node determines whether the confirmation message carries information that reconciliation on the settlement result succeeds.

The first blockchain node performs confirmation on the content of the confirmation message received in step 919 to determine whether the confirmation message carries information that reconciliation on the settlement result succeeds.

If the confirmation message carries information that reconciliation on the settlement result succeeds, steps 922 to 926 are performed; or
if the confirmation message does not carry information that reconciliation on the settlement result succeeds, steps 921 to 926 are performed.

921. The first blockchain node performs dispute handling.

If the first blockchain node determines that the confirmation message does not carry information that reconciliation on the settlement result succeeds, the first blockchain node may return objection information to the first client. Alternatively, if a dispute handling policy is agreed in the smart contract, the first blockchain node may perform dispute handling according to the smart contract. Dispute handling is based on processing logic negotiated between an operator and a partner. For example, when usage of a user recorded by the partner is inconsistent with that recorded by the operator, the usage of the user recorded by the operator prevails. A specific handling rule is not limited herein. The first client determines a target original call detail record through dispute handling, and performs reconciliation on the target original call detail record, that is, performs steps 915 to 920.

922. The first blockchain node sends a synchronization message to the second blockchain node.

If the first blockchain node determines that the confirmation message carries information that reconciliation on the settlement result succeeds, that is, reconciliation on the settlement result succeeds, the first blockchain node sends a synchronization message to the second blockchain node, to synchronize the settlement result having undergone reconciliation confirmation to the second blockchain.

923. The first blockchain updates cumulative bill data.

The first blockchain node performs data accumulation and updates cumulative bill data, that is, adds the settlement result to bill data.

924. The first blockchain node sends a synchronization message to the second blockchain node.

The first blockchain node synchronizes updated cumulative bill data in step 924 to the second blockchain node, and the second blockchain node stores the updated bill data.

925. The first blockchain node sends bill data to the first client.

At the end of a billing cycle or when a preset time point arrives, the first blockchain node sends the bill data to the first client.

926. The second blockchain node sends bill data to the second client.

At the end of a billing cycle or when a preset time point arrives, the second blockchain node sends the bill data to the second client.

It should be noted that an execution sequence between steps 925 and 926 is not limited. Step 925 may be performed before step 926, or step 926 may be performed before step 925.

The embodiments of this application provide a settlement method based on blockchain technology. A settlement initiator and a settlement participant jointly establish a settlement blockchain network, and the settlement parties access the blockchain network through their respective blockchain nodes. A first blockchain node releases a settlement agreement, and may record the settlement agreement in a blockchain in a form of a smart contract after the settlement agreement is agreed by the settlement participant. A first client releases an original call detail record and synchronizes the original call detail record to the blockchain. A blockchain node processes the original call detail record according to a stipulation in the smart contract to obtain a settlement result, and may synchronize the settlement result to the blockchain after the settlement result is confirmed by each party. During settlement at the end of a billing cycle, the blockchain node sends bill data obtained based on the settlement result to a client, and each settlement party performs settlement based on the bill data.

Due to the establishment of the settlement blockchain network, the settlement parties agree on, in a form of a smart contract, a settlement rule agreed by the parties. The settlement participant may further obtain the original call detail record generated by the first client. After the settlement result sent by the first blockchain node is received, real-time reconciliation may be performed, according to the smart contract, on the settlement result generated by the first blockchain node. The settlement process is open and transparent. A confirmation message is sent only when there is no objection to the settlement result. In this way, real-time reconciliation is implemented conveniently and fast.

The foregoing describes the blockchain-based settlement method. The following describes a blockchain node and a blockchain client that implement the settlement method.

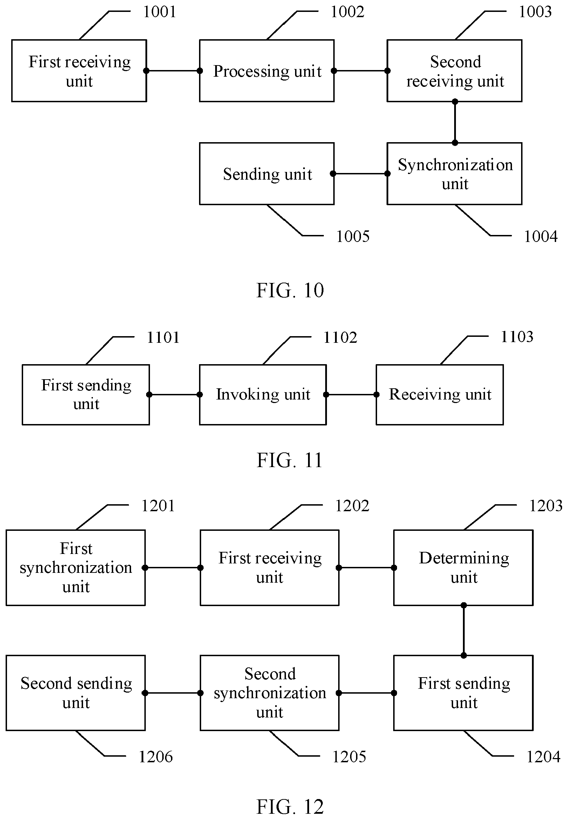

FIG. 10 is a schematic diagram of an embodiment of a blockchain node according to the embodiments of this application.

A first receiving unit 1001 is configured to: receive a first original call detail record sent by a first client, and synchronize the first original call detail record to the blockchain, where the first client is a client of a settlement initiator, and the blockchain includes a first blockchain node of the settlement initiator and a second blockchain node of a settlement participant.

A processing unit 1002 is configured to: process the first original call detail record according to a smart contract to obtain a first settlement result, and send the first settlement result to the second blockchain node, where the smart contract is generated according to a settlement agreement.

A second receiving unit 1003 is configured to receive a first confirmation message returned by the second blockchain node, where the first confirmation message is used to indicate a result of reconciliation performed by the second blockchain node on the first original call detail record according to the smart contract.

A synchronization unit 1004 is configured to: when the first confirmation message carries information that reconciliation on the first settlement result succeeds, synchronize, by the first blockchain node, the first settlement result to the blockchain.

A sending unit 1005 is configured to send bill data generated based on the first settlement result to the first client.

Further, the blockchain node is further configured to receive a settlement agreement sent by the first client; send the settlement agreement to the second blockchain node; and if the first blockchain node receives a confirmation message for the settlement agreement returned by the second blockchain node, generate the smart contract according to the settlement agreement, and synchronize the smart contract to the blockchain.

Further, the blockchain node is further configured to synchronize a second original call detail record released by the second blockchain node.

If the first confirmation message does not carry the information that reconciliation on the first settlement result succeeds, determining, by the first blockchain node, a target original call detail record based on a preset rule, processing the target original call detail record according to the smart contract to obtain a second settlement result, and sending the second settlement result to the second blockchain node, where the target original call detail record is a first original call detail record or a second original call detail record; receive a second confirmation message returned by the second blockchain node, where the second confirmation message is used to indicate a result obtained by performing reconciliation by the second blockchain node on the second settlement result according to the smart contract; determine whether the second confirmation message carries information that reconciliation on the second settlement result succeeds; if the second confirmation message carries the information that the reconciliation on the second settlement result succeeds, synchronize the second settlement result to the blockchain; and send bill data generated based on the second settlement result to the first client.

A process in which the blockchain node provided in this embodiment of this application implements the blockchain-based settlement method is similar to the method procedure described in the embodiment shown in FIG. 5, and details are not described herein again.

The first blockchain node provided in this embodiment of this application implements sharing of an original call detail record and real-time reconciliation on a settlement result, thereby avoiding a prior-art problem that it is difficult to perform backtracking and reconciliation during settlement at the end of a billing cycle.

The foregoing describes a blockchain node of a settlement initiator, and the following describes a blockchain client of the settlement initiator. FIG. 11 is a schematic diagram of an embodiment of a blockchain client according to the embodiments of this application.

A first sending unit 1101 is configured to send a first original call detail record to a first blockchain node, where the first client is a client of a settlement initiator.

An invoking unit 1102 is configured to invoke a blockchain interface, to trigger the first blockchain node to process the first original call detail record according to a smart contract to obtain a first settlement result, where the smart contract is generated according to a settlement agreement.

A receiving unit 1103 is configured to receive bill data sent by the first blockchain node, where the bill data is generated based on the first settlement result.

Further, the blockchain client is further configured to send the settlement agreement to the first blockchain node.

Further, the blockchain client is further configured to: if the first client receives a dispute message sent by the first blockchain node, process the dispute message based on a preset rule, where the preset rule includes that the first client invokes the blockchain interface again to trigger the first blockchain node to process the first original call detail record according to the smart contract.

A process in which the blockchain client provided in this embodiment of this application implements the blockchain-based settlement method is similar to the method procedure described in the embodiment shown in FIG. 6, and details are not described herein again.

The first client provided in this embodiment of this application sends a settlement agreement and an original call detail record to a settlement participant through the blockchain interface. In this way, the original call detail record is shared by all settlement parties, and the settlement participant can perform real-time reconciliation, thereby avoiding a dispute at the end of a billing cycle.

The foregoing describes a blockchain node and a client of a settlement initiator. The following describes a blockchain node of a settlement participant. FIG. 12 is a schematic diagram of an embodiment of a blockchain node according to the embodiments of this application.

A first synchronization unit 1201 is configured to synchronize a first original call detail record released by a first blockchain node, where the second blockchain node is a blockchain node of a settlement participant, and the first blockchain node is a blockchain node of a settlement initiator.

A first receiving unit 1202 is configured to receive a first settlement result sent by the first blockchain node, where the first settlement result is obtained by the first blockchain node by processing the first original call detail record according to a smart contract, and the smart contract is generated according to a settlement agreement.

A determining unit 1203 is configured to determine whether a result calculated according to the smart contract is consistent with the first settlement result.

A sending unit 1204 is configured to: when the result calculated according to the smart contract is consistent with the first settlement result, send a first confirmation message to the first blockchain node, where the first confirmation message carries information that reconciliation on the first settlement result succeeds.

A second synchronization unit is configured to synchronize the first settlement result released by the first blockchain node.

A second sending unit 1206 is configured to send bill data generated based on the first settlement result to a second client, where the second client is a client of the settlement participant.

Further, the blockchain node is further configured to: receive a settlement agreement sent by the first client; send the settlement agreement to the second client; if the second blockchain node receives a confirmation message for the settlement agreement from the second client, return the confirmation message for the settlement agreement to the first blockchain node; and synchronize the smart contract released by the first blockchain node.

Further, the determining unit 1203 is specifically configured to: process the first original call detail record according to the smart contract to obtain a second settlement result; determine whether the second settlement result is consistent with the first settlement result; and if the second settlement result is consistent with the first settlement result, trigger to return a first confirmation message to the first blockchain node, where the first confirmation message carries information that reconciliation on the second settlement result succeeds; or if the second settlement result is inconsistent with the first settlement result, return a second confirmation message to the first blockchain node, where the second confirmation message carries information that reconciliation on the second settlement result fails.

In addition, the blockchain node further includes:
a second receiving unit, configured to: receive a second original call detail record sent by the second client, and synchronize the second original call detail record to the blockchain.

Further, the determining unit 1203 is specifically configured to: process the second original call detail record according to the smart contract to obtain a third settlement result; determine whether the third settlement result is consistent with the first settlement result; and if the third settlement result is consistent with the first settlement result, trigger to return a first confirmation message to the first blockchain node, where the first confirmation message carries information that reconciliation on the first settlement result succeeds; or if the third settlement result is inconsistent with the first settlement result, return a second confirmation message to the first blockchain node, where the second confirmation message carries information that reconciliation on the first settlement result fails.

A process in which the blockchain node provided in this embodiment of this application implements the blockchain-based settlement method is similar to the method procedure described in the embodiment shown in FIG. 7, and details are not described herein again.

The second blockchain node in the embodiments of this application may receive an original call detail record and a settlement result from the first blockchain node, and perform real-time reconciliation on the settlement result according to the smart contract, where a confirmed settlement result is stored in the blockchain node. During the settlement, the second blockchain node may send bill data to a second client. The settlement process implements original call detail record sharing and real-time reconciliation, and is open and transparent, thereby avoiding a dispute during settlement by transferring accounts at the end of a billing cycle.

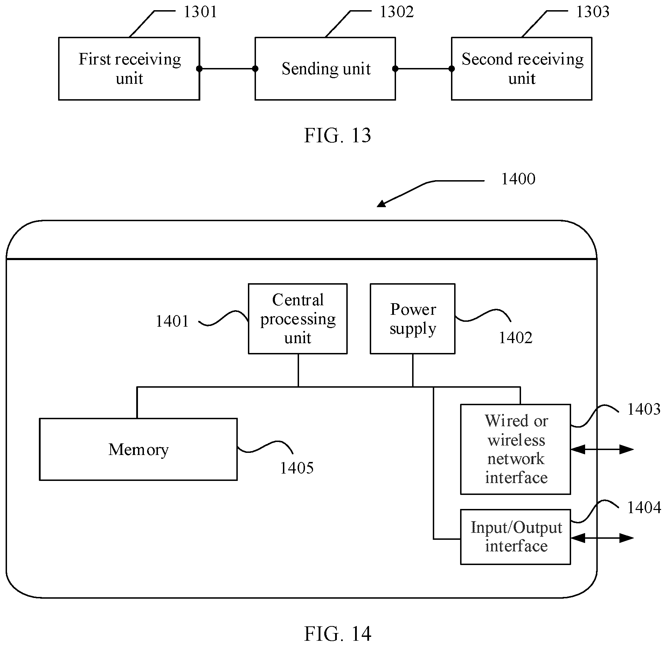

The foregoing describes a blockchain node of a settlement participant, and the following describes a blockchain client of the settlement participant. FIG. 13 is a schematic diagram of an embodiment of a blockchain client according to the embodiments of this application.

A first receiving unit 1301 is configured to confirm a settlement agreement sent by a second blockchain node, where the settlement agreement is used to generate a smart contract, and the second client is a client of a settlement participant.

A sending unit 1302 is configured to: if the second client receives confirmation information for the settlement agreement, send a confirmation message for the settlement agreement to the first blockchain node.

A second receiving unit 1303 is configured to receive, bill data sent by the second blockchain node, where the bill data is obtained after a first original call detail record is processed according to the smart contract, the first original call detail record is released by the first blockchain node, and the first blockchain node is a node of a settlement initiator.

Further, the client is further configured to: send a second original call detail record to the second blockchain node.

A process in which the blockchain client provided in this embodiment of this application implements the blockchain-based settlement method is similar to the method procedure described in the embodiment shown in FIG. 8, and details are not described herein again.

The second client provided in this embodiment of this application confirms a settlement agreement, and performs settlement according to a smart contract generated based on the settlement agreement. The second client that has a settlement-related transaction record may upload an original call detail record generated by itself to a blockchain node to perform reconciliation on a settlement result, and feeds back a reconciliation result in real time. The settlement result having undergone reconciliation is sent from the second blockchain node to the second client in a form of bill data during the settlement. The second client not only can perform confirmation on a settlement rule, but also can perform reconciliation on a settlement result obtained based on the original call detail record recorded by itself. The settlement process is open and transparent, and real-time reconciliation can be performed.

The following describes another embodiment of a blockchain node according to the embodiments of this application. FIG. 14 is a schematic diagram of another embodiment of a terminal according to the embodiments of this application.

The blockchain node 1400 may greatly vary due to different configurations or different performance, and may include one or more central processing units (central processing units, CPU) 1401 (for example, one or more processors) and a memory 1405, and the memory 1405 stores one or more application programs or data.

The memory 1405 may be volatile storage or persistent storage. A program stored in the memory 1405 may include one or more modules, and each module may include a series of instruction operations for the blockchain node. Further, the central processing unit 1401 may be configured to communicate with the memory 1405, and perform, on the blockchain node 1400, a series of instruction operations in the memory 1405.

The blockchain node 1400 may further include one or more power supplies 1402, one or more wired or wireless network interfaces 1403, one or more input/output interfaces 1404, and/or one or more operating systems, for example, Windows Server^{™}, Mac OS X^{™}, and Unix^{™}, Linux^{™}, FreeBSD^{™}, and the like.

A process performed by the central processing unit 1401 in the blockchain node 1400 in this embodiment is similar to the method process described in the embodiment shown in FIG. 5 or FIG. 7, and details are not described herein again.

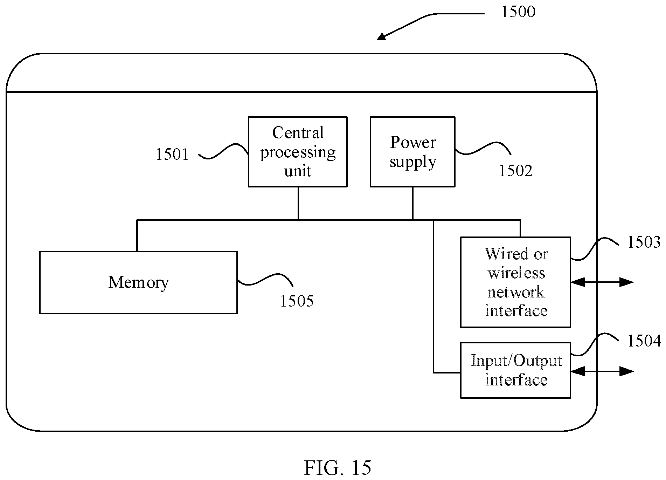

The following describes another embodiment of a blockchain client according to the embodiments of this application. FIG. 15 is a schematic diagram of another embodiment of a blockchain client according to the embodiments of this application.

The blockchain client 1500 may greatly vary due to different configurations or different performance, and may include one or more central processing units (central processing units, CPU) 1501 (for example, one or more processors) and a memory 1505, and the memory 1505 stores one or more application programs or data.

The memory 1505 may be volatile storage or persistent storage. A program stored in the memory 1505 may include one or more modules, and each module may include a series of instruction operations for the blockchain client. Further, the central processing unit 1501 may be configured to communicate with the memory 1505, and perform, on the blockchain client 1500, a series of instruction operations in the memory 1505.

The blockchain client 1500 may further include one or more power supplies 1502, one or more wired or wireless network interfaces 1503, one or more input/output interfaces 1504, and/or one or more operating systems, for example, Windows Server^{™}, Mac OS X^{™}, and Unix^{™}, Linux^{™}, FreeBSD^{™}, and the like.

A process performed by the central processing unit 1501 in the blockchain client 1500 in this embodiment is similar to the method process described in the embodiment shown in FIG. 6 or FIG. 8, and details are not described herein again.

An embodiment of this application further provides a computer storage medium. The computer storage medium is configured to store a computer software instruction used by the foregoing blockchain node or blockchain client, and the computer software instruction includes a program designed for the terminal.

An embodiment of this application further provides a computer program product. The computer program product includes a computer software instruction, and the computer software instruction may be loaded by a processor to implement the method procedures in the embodiments shown in FIG. 5 to FIG. 9.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof.

## Claims

1. A blockchain-based settlement method, comprising:
receiving (501), by a first blockchain node, a first original call detail record sent by a first client, and synchronizing the first original call detail record to a blockchain, wherein the first client is a client of a settlement initiator, and the blockchain comprises the first blockchain node of the settlement initiator and a second blockchain node of a settlement participant;
processing (502), by the first blockchain node, the first original call detail record according to a smart contract to obtain a first settlement result, and sending the first settlement result to the second blockchain node, wherein the smart contract is generated according to a settlement agreement;
receiving (503), by the first blockchain node, a first confirmation message returned by the second blockchain node, wherein the first confirmation message carries a result obtained by performing reconciliation by the second blockchain node on the first settlement result according to the smart contract, wherein the first confirmation message carries information that the reconciliation on the first settlement result succeeds;
if the first confirmation message is received:
synchronizing (504), by the first blockchain node, the first settlement result to the blockchain; and
sending (505), by the first blockchain node, bill data generated based on the first settlement result to the first client.

2. A blockchain-based settlement method, comprising:
synchronizing (701), by a second blockchain node, a first original call detail record released by a first blockchain node, wherein the second blockchain node is a blockchain node of a settlement participant, and the first blockchain node is a blockchain node of a settlement initiator;
receiving (702), by the second blockchain node, a first settlement result sent by the first blockchain node, wherein the first settlement result is obtained by the first blockchain node by processing the first original call detail record according to a smart contract, and the smart contract is generated according to a settlement agreement;
determining (703), by the second blockchain node, whether a result calculated according to the smart contract is consistent with the first settlement result;
if the result calculated according to the smart contract is consistent with the first settlement result:
sending (704), by the second blockchain node, a first confirmation message to the first blockchain node, wherein the first confirmation message carries information that reconciliation on the first settlement result succeeds;
synchronizing (705), by the second blockchain node, the first settlement result released by the first blockchain node; and
sending (706), by the second blockchain node, bill data generated based on the first settlement result to a second client, wherein the second client is a client of the settlement participant.

3. A blockchain node, which is a first blockchain node, comprising:
a first receiving unit, configured to: receive (501) a first original call detail record sent by a first client, and synchronize the first original call detail record to the blockchain, wherein the first client is a client of a settlement initiator, and the blockchain comprises the first blockchain node of the settlement initiator and a second blockchain node of a settlement participant;
a processing unit, configured to: process (502) the first original call detail record according to a smart contract to obtain a first settlement result, and send the first settlement result to the second blockchain node, wherein the smart contract is generated according to a settlement agreement;
a second receiving unit, configured to receive (503) a first confirmation message returned by the second blockchain node, wherein the first confirmation message is used to indicate a result of reconciliation performed by the second blockchain node on the first original call detail record according to the smart contract, wherein the first confirmation message carries information that the reconciliation on the first settlement result succeeds;
a synchronization unit, configured to: if the first confirmation message is received, synchronize (504) the first settlement result to the blockchain; and
a sending unit, configured to, after the synchronization unit synchronizes the first settlement result to the blockchain, send (505) bill data generated based on the first settlement result to the first client.

4. The blockchain node according to claim 3, wherein the blockchain node is further configured to:
receive (901) the settlement agreement sent by the first client;
send (902) the settlement agreement to the second blockchain node; and
if the first blockchain node receives (906) a confirmation message for the settlement agreement returned by the second blockchain node , generate the smart contract according to the settlement agreement, and synchronize (908) the smart contract to the blockchain.

5. A blockchain node, which is a second blockchain node, comprising:
a first synchronization unit, configured to synchronize (701, 913) a first original call detail record released by a first blockchain node, wherein the second blockchain node is a blockchain node of a settlement participant, and the first blockchain node is a blockchain node of a settlement initiator;
a first receiving unit, configured to receive (702, 916) a first settlement result sent by the first blockchain node, wherein the first settlement result is obtained by the first blockchain node by processing the first original call detail record according to a smart contract, and the smart contract is generated according to a settlement agreement;
a determining unit, configured to determine (703, 918) whether a result calculated according to the smart contract is consistent with the first settlement result;
a sending unit, configured to: when the result calculated according to the smart contract is consistent with the first settlement result, send (704, 919) a first confirmation message to the first blockchain node, wherein the first confirmation message carries information that reconciliation on the first settlement result succeeds;
a second synchronization unit, configured to, after the sending unit sends the first confirmation message to the first blockchain node, synchronize (705, 922) the first settlement result released by the first blockchain node; and
a second sending unit, configured to, after the sending unit sends the first confirmation message to the first blockchain node, send (706, 926) bill data generated based on the first settlement result to a second client, wherein the second client is a client of the settlement participant.

6. The blockchain node according to claim 5, wherein the blockchain node is further configured to:
receive (902) a settlement agreement sent by the first client;
send (903) the settlement agreement to the second client;
if the second blockchain node receives (905) a confirmation message for the settlement agreement from the second client, return (906) the confirmation message for the settlement agreement to the first blockchain node; and
synchronize the smart contract released by the first blockchain node.

7. The blockchain node according to claim 5 or 6, wherein the determining unit is specifically configured to:
process (917) the first original call detail record according to the smart contract to obtain a second settlement result;
determine (918) whether the second settlement result is consistent with the first settlement result; and
if the second settlement result is consistent with the first settlement result, trigger to return (919) the first confirmation message to the first blockchain node, wherein the first confirmation message carries information that reconciliation succeeds.

8. The blockchain node according to claim 5 or 6, wherein the blockchain node further comprises:
a second receiving unit, configured to: receive a second original call detail record sent by the second client, and synchronize the second original call detail record to the blockchain.
wherein the determining unit is specifically configured to:
process the second original call detail record according to the smart contract to obtain a third settlement result;
determine whether the third settlement result is consistent with the first settlement result; and
if the third settlement result is consistent with the first settlement result, trigger to return a first confirmation message to the first blockchain node, wherein the first confirmation message carries information that reconciliation on the first settlement result succeeds.

9. A computer program product comprising an instruction, wherein when the computer program product is run on a computer, the computer is enabled to perform the method according to any one of claims 1 to 2.

10. A computer-readable storage medium, comprising an instruction, wherein when the instruction is run on a computer, the computer is enabled to perform the method according to any one of claims 1 to 2.

## Patentansprüche

1. Blockchain-basiertes Settlement-Verfahren, umfassend:
Empfangen (501) einer ersten ursprünglichen Anrufdetail-Aufzeichnung, die von einem ersten Client gesendet wurde, durch einen ersten Blockchain-Knoten und Synchronisieren der ersten ursprünglichen Anrufdetail-Aufzeichnung mit einer Blockchain, wobei der erste Client ein Client eines Settlement-Initiators ist und die Blockchaint den ersten Blockchain-Knoten des Settlement-Initiators und einen zweiten Blockchain-Knoten eines Settlement-Teilnehmers umfasst;
Verarbeiten (502) der ersten ursprünglichen Anrufdetail-Aufzeichnung gemäß einem Smart-Vertrag durch den ersten Blockchain-Knoten, um ein erstes Settlement-Ergebnis zu erhalten, und Senden des ersten Settlement-Ergebnisses an den zweiten Blockchain-Knoten, wobei der Smart-Vertrag gemäß einer Settlement-Vereinbarung generiert wird;
Empfangen (503) einer ersten Bestätigungsnachricht, die von dem zweiten Blockchain-Knoten zurückgegeben wurde, durch den ersten Blockchain-Knoten, wobei die erste Bestätigungsnachricht ein Ergebnis enthält, das durch Durchführen eines Abgleichs durch den zweiten Blockchain-Knoten mit dem ersten Settlement-Ergebnis gemäß dem Smart-Vertrag erhalten wurde, wobei die erste Bestätigungsnachricht Informationen enthält, dass der Abgleich mit dem ersten Settlement-Ergebnis erfolgreich ist;
wenn die erste Bestätigungsnachricht empfangen wird:
Synchronisieren (504) des ersten Settlement-Ergebnisses mit der Blockchain durch den ersten Blockchain-Knoten; und
Senden (505) durch den ersten Blockchain-Knoten von Rechnungsdaten, die auf der Grundlage des ersten Settlement-Ergebnisses generiert wurden, an den ersten Client.

2. Blockchain-basiertes Settlement-Verfahren, umfassend:
Synchronisieren (701) einer ersten ursprünglichen Anrufdetail-Aufzeichnung, die von einem ersten Blockchain-Knoten freigegeben wurde, durch einen zweiten Blockchain-Knoten, wobei der zweite Blockchain-Knoten ein Blockchain-Knoten eines Settlement-Teilnehmers und der erste Blockchain-Knoten ein Blockchain-Knoten eine Settlement-Initiators ist;
Empfangen (702) eines von dem ersten Blockchain-Knoten gesendeten ersten Settlement-Ergebnisses durch den zweiten Blockchain-Knoten, wobei das erste Settlement-Ergebnis von dem ersten Blockchain-Knoten durch Verarbeiten der ersten ursprünglichen Anrufdetail-Aufzeichnung gemäß einem Smart-Vertrag erhalten wird und der Smart-Vertrag gemäß einer Settlement-Vereinbarung generiert wird;
Bestimmen (703) durch den zweiten Blockchain-Knoten, ob ein gemäß dem Smart-Vertrag berechnetes Ergebnis mit dem ersten Settlement-Ergebnis übereinstimmt;
wenn das gemäß Smart-Vertrag berechnete Ergebnis mit dem ersten Settlement-Ergebnis übereinstimmt:
Senden (704) einer ersten Bestätigungsnachricht durch den zweiten Blockchain-Knoten an den ersten Blockchain-Knoten, wobei die erste Bestätigungsnachricht Informationen enthält, dass der Abgleich mit dem ersten Settlement-Ergebnis erfolgreich ist;
Synchronisieren (705) des ersten Settlement-Ergebnisses, das von dem ersten Blockchain-Knoten freigegeben wurde, durch den zweiten Blockchain-Knoten; und
Senden (706) von Rechnungsdaten durch den zweiten Blockchain-Knoten, die auf der Grundlage des ersten Settlement-Ergebnisses generiert wurden, an einen zweiten Client, wobei der zweite Client ein Client des Settlement-Teilnehmers ist.

3. Blockchain-Knoten, der ein erster Blockchain-Knoten ist, umfassend:
eine Verarbeitungseinheit, die konfiguriert ist zum: Empfangen (501) einer ersten ursprünglichen Anrufdetail-Aufzeichnung, die von einem ersten Client gesendet wurde, durch einen ersten Blockchain-Knoten und Synchronisieren der ersten ursprünglichen Anrufdetail-Aufzeichnung mit der Blockchain, wobei der erste Client ein Client eines Settlement-Initiators ist und die Blockchaint den ersten Blockchain-Knoten des Settlement-Initiators und einen zweiten Blockchain-Knoten eines Settlement-Teilnehmers umfasst;
eine Verarbeitungseinheit, die konfiguriert ist zum:
Verarbeiten (502) der ersten ursprünglichen Anrufdetail-Aufzeichnung gemäß einem Smart-Vertrag durch den ersten Blockchain-Knoten, um ein erstes Settlement-Ergebnis zu erhalten, und Senden des ersten Settlement-Ergebnisses an den zweiten Blockchain-Knoten, wobei der Smart-Vertrag gemäß einer Settlement-Vereinbarung generiert wird;
eine zweite Empfangseinheit, die zum Empfangen (503) einer ersten Bestätigungsnachricht konfiguriert ist, die von dem zweiten Blockchain-Knoten zurückgegeben wird, wobei die erste Bestätigungsnachricht verwendet wird, um ein Ergebnis des von dem zweiten Blockchain-Knoten durchgeführten Abgleichs an der ersten ursprünglichen Anrufdetail-Aufzeichnung gemäß dem Smart-Vertrag anzuzeigen, wobei die erste Bestätigungsnachricht Informationen enthält, dass der Abgleich an dem ersten Settlement-Ergebnis erfolgreich ist;
eine Synchronisierungseinheit, die konfiguriert ist zum: wenn die erste Bestätigungsnachricht empfangen wird, Synchronisieren (504) des ersten Settlement-Ergebnis mit der Blockchain; und
eine Sendeeinheit, die so konfiguriert ist, dass sie, nachdem die Synchronisierungseinheit das erste Settlement-Ergebnis mit der Blockchain synchronisiert hat, auf der Grundlage des ersten Settlement-Ergebnisses generierte Rechnungsdaten an den ersten Client sendet (505).

4. Blockchain-Knoten nach Anspruch 3, wobei der Blockchain-Knoten ferner konfiguriert ist zum:
Empfangen (901) der von dem ersten Client gesendeten Setlement-Vereinbarung;
Senden (902) der Setlement-Vereinbarung an den zweiten Blockchain-Knoten; und
wenn der erste Blockchain-Knoten eine von dem zweiten Blockchain-Knoten zurückgegebene Bestätigungsnachricht für die Settlement-Vereinbarung empfängt (906), Generieren des Smart-Vertrags gemäß der Settlement-Vereinbarung und Synchronisieren (908) des Smart-Vertrags mit der Blockchain.

5. Blockchain-Knoten, der ein zweiter Blockchain-Knoten ist, umfassend:
eine erste Synchronisationseinheit, die dazu konfiguriert ist, eine erste ursprünglichen Anrufdetail-Aufzeichnung zu synchronisieren (701, 913), die von einem ersten Blockchain-Knoten freigegeben wurde, wobei der zweite Blockchain-Knoten ein Blockchain-Knoten eines Settlement-Teilnehmers ist und der erste Blockchain-Knoten ein Blockchain-Knoten eines Settlement-Initiators ist;
eine erste Empfangseinheit, die zum Empfangen (702, 916) eines vom ersten Blockchain-Knoten gesendeten ersten Abrechnungsergebnisses konfiguriert ist, wobei das erste Settlement-Ergebnis vom ersten Blockchain-Knoten durch Verarbeiten der ersten ursprünglichen Anrufdetail-Aufzeichnung gemäß einem Smart-Vertrag erhalten wird und der Smart-Vertrag gemäß einer Settlement-Vereinbarung generiert wird;
eine Bestimmungseinheit, die konfiguriert ist, um zu bestimmen (703, 918), ob ein gemäß des Smart-Vertrags berechnetes Ergebnis mit dem ersten Settlement-Ergebnis übereinstimmt;
eine Sendeeinheit, die konfiguriert ist zum: wenn das gemäß dem Smart -Vertrag berechnete Ergebnis mit dem ersten Settlement-Ergebnis übereinstimmt, Senden (704, 919) einer ersten Bestätigungsnachricht an den ersten Blockchain-Knoten, wobei die erste Bestätigungsnachricht Informationen enthält, dass der Abgleich mit dem ersten Settlement-Ergebnis erfolgreich ist;
eine zweite Synchronisationseinheit, die so konfiguriert ist, dass sie, nachdem die Sendeeinheit die erste Bestätigungsnachricht an den ersten Blockchain-Knoten gesendet hat, das erste von dem ersten Blockchain-Knoten freigegebene Settlement-Ergebnis synchronisiert (705, 922); und
eine zweite Sendeeinheit, die so konfiguriert ist, dass sie, nachdem die Sendeeinheit die erste Bestätigungsnachricht an den ersten Blockchain-Knoten gesendet hat, auf der Grundlage des ersten Settlement-Ergebnisses generierte Rechnungsdaten an einen zweiten Client sendet (706, 926), wobei der zweite Client ein Client des Settlement-Teilnehmers ist.

6. Blockchain-Knoten nach Anspruch 5, wobei der Blockchain-Knoten ferner konfiguriert ist zum:
Empfangen (902) einer von dem ersten Client gesendeten Settlement-Vereinbarung;
Senden (903) der Settlement-Vereinbarung an den zweiten Client;
wenn der zweite Blockchain-Knoten eine Bestätigungsnachricht für die Settlement-Vereinbarung von dem zweiten Client empfängt (905), Zurücksenden (906) der Bestätigungsnachricht für die Settlement-Vereinbarung an den ersten Blockchain-Knoten; und
Synchronisieren des Smart-Vertrags, der von dem ersten Blockchain-Knoten freigegebenen wurde.

7. Blockchain-Knoten nach Anspruch 5 oder 6, wobei die Bestimmungseinheit speziell konfiguriert ist zum:
Verarbeiten (917) der ersten ursprünglichen Anrufdetail-Aufzeichnung gemäß dem Smart-Vertrag, um ein zweites Settlement-Ergebnis zu erhalten;
Bestimmen (918), ob das zweite Settlement-Ergebnis mit dem ersten Settlement-Ergebnis übereinstimmt; und
wenn das zweite Settlement-Ergebnis mit dem ersten Settlement-Ergebnis übereinstimmt, Auslösen der Rücksendung (919) der ersten Bestätigungsnachricht an den ersten Blockchain-Knoten, wobei die erste Bestätigungsnachricht Informationen enthält, dass der Abgleich erfolgreich war.

8. Blockchain-Knoten nach Anspruch 5 oder 6, wobei der Blockchain-Knoten ferner umfasst:
eine zweite Empfangseinheit, die konfiguriert zum: Empfangen einer zweiten ursprünglichen Anrufdetail-Aufzeichnung, der von dem zweiten Client gesendet wurde, und die zweite ursprüngliche Anrufdetail-Aufzeichnung mit der Blockchain zu synchronisieren.
wobei die Bestimmungseinheit speziell konfiguriert ist zum:
Verarbeiten der zweiten ursprünglichen Anrufdetail-Aufzeichnung gemäß dem Smart-Vertrag, um ein drittes Settlement-Ergebnis zu erhalten;
Bestimmen, ob das dritte Settlement-Ergebnis mit dem ersten Settlement-Ergebnis übereinstimmt; und
wenn das dritte Settlement-Ergebnis mit dem ersten Settlement-Ergebnis übereinstimmt, Auslösen der Rücksendung einer der ersten Bestätigungsnachricht an den ersten Blockchain-Knoten, wobei die erste Bestätigungsnachricht Informationen enthält, dass der Abgleich mit dem ersten Settlement-Ergebnis erfolgreich war.

9. Computer-Programmprodukt, das eine Anweisung umfasst, wobei, wenn das Computer-Programmprodukt auf einem Computer ausgeführt wird, der Computer in die Lage versetzt wird, das Verfahren nach einem beliebigen der Ansprüche 1 bis 2 durchzuführen.

10. Computerlesbares Speichermedium, das eine Anweisung umfasst, wobei ein Ausführen der Anweisung auf einem Computer es dem Computer ermöglicht, das Verfahren nach einem der Ansprüche 1 bis 2 durchzuführen.

## Revendications

1. Procédé de règlement à base de chaîne de blocs, comprenant :
la réception (501), par un premier noeud de chaîne de blocs, d'un premier enregistrement détaillé d'appel original envoyé par un premier client, et la synchronisation du premier enregistrement détaillé d'appel original avec une chaîne de blocs, dans lequel le premier client est un client d'un initiateur de règlement, et la chaîne de blocs comprend le premier noeud de chaîne de blocs de l'initiateur de règlement et un second noeud de chaîne de blocs d'un participant au règlement ;
le traitement (502), par le premier noeud de chaîne de blocs, du premier enregistrement détaillé d'appel original selon un contrat intelligent pour obtenir un premier résultat de règlement, et l'envoi du premier résultat de règlement au second noeud de chaîne de blocs, dans lequel le contrat intelligent est généré selon une entente de règlement ;
la réception (503), par le premier noeud de chaîne de blocs, d'un premier message de confirmation renvoyé par le second noeud de chaîne de blocs, dans lequel le premier message de confirmation transporte un résultat obtenu en réalisant un rapprochement par le second noeud de chaîne de blocs sur le premier résultat de règlement selon le contrat intelligent, dans lequel le premier message de confirmation transporte des informations indiquant que le rapprochement sur le premier résultat de règlement a réussi ;
si le premier message de confirmation est reçu :
la synchronisation (504), par le premier noeud de chaîne de blocs, du premier résultat de règlement avec la chaîne de blocs ; et
l'envoi (505), par le premier noeud de chaîne de blocs, de données de facture générées sur la base du premier résultat de règlement au premier client.

2. Procédé de règlement à base de chaîne de blocs, comprenant :
la synchronisation (701), par un second noeud de chaîne de blocs, d'un premier enregistrement détaillé d'appel original publié par un premier noeud de chaîne de blocs, dans lequel le second noeud de chaîne de blocs est un noeud de chaîne de blocs d'un participant au règlement, et le premier noeud de chaîne de blocs est un noeud de chaîne de blocs d'un initiateur de règlement ;
la réception (702), par le second noeud de chaîne de blocs, d'un premier résultat de règlement envoyé par le premier noeud de chaîne de blocs, dans lequel le premier résultat de règlement est obtenu par le premier noeud de chaîne de blocs en traitant le premier enregistrement détaillé d'appel original selon un contrat intelligent, et le contrat intelligent est généré selon une entente de règlement ;
la détermination (703), par le second noeud de chaîne de blocs, du fait de savoir si un résultat calculé selon le contrat intelligent est cohérent avec le premier résultat de règlement ;
si le résultat calculé selon le contrat intelligent est cohérent avec le premier résultat de règlement :
l'envoi (704), par le second noeud de chaîne de blocs, d'un premier message de confirmation au premier noeud de chaîne de blocs, dans lequel le premier message de confirmation transporte des informations indiquant que le rapprochement sur le premier résultat de règlement a réussi ;
la synchronisation (705), par le second noeud de chaîne de blocs, du premier résultat de règlement publié par le premier noeud de chaîne de blocs ; et
l'envoi (706), par le second noeud de chaîne de blocs, de données de facture générées sur la base du premier résultat de règlement à un second client, dans lequel le second client est un client du participant au règlement.

3. Noeud de chaîne de blocs, qui est un premier noeud de chaîne de blocs, comprenant :
une première unité de réception, configurée pour : recevoir (501) un premier enregistrement détaillé d'appel original envoyé par un premier client, et synchroniser le premier enregistrement détaillé d'appel original avec la chaîne de blocs, dans lequel le premier client est un client d'un initiateur de règlement, et la chaîne de blocs comprend le premier noeud de chaîne de blocs de l'initiateur de règlement et un second noeud de chaîne de blocs d'un participant au règlement ;
une unité de traitement, configurée pour : traiter (502) le premier enregistrement détaillé d'appel original selon un contrat intelligent pour obtenir un premier résultat de règlement, et envoyer le premier résultat de règlement au second noeud de chaîne de blocs, dans lequel le contrat intelligent est généré selon une entente de règlement ;
une seconde unité de réception, configurée pour recevoir (503) un premier message de confirmation renvoyé par le second noeud de chaîne de blocs, dans lequel le premier message de confirmation est utilisé pour indiquer un résultat de rapprochement réalisé par le second noeud de chaîne de blocs sur le premier enregistrement détaillé d'appel original selon le contrat intelligent, dans lequel le premier message de confirmation transporte des informations indiquant que le rapprochement sur le premier résultat de règlement a réussi ;
une unité de synchronisation, configurée pour : si le premier message de confirmation est reçu, synchroniser (504) le premier résultat de règlement avec la chaîne de blocs ; et
une unité d'envoi, configurée pour, après que l'unité de synchronisation a synchronisé le premier résultat de règlement avec la chaîne de blocs, envoyer (505) des données de facture générées sur la base du premier résultat de règlement au premier client.

4. Noeud de chaîne de blocs selon la revendication 3, dans lequel le noeud de chaîne de blocs est en outre configuré pour :
recevoir (901) l'entente de règlement envoyée par le premier client ;
envoyer (902) l'entente de règlement au second noeud de chaîne de blocs ; et
si le premier noeud de chaîne de blocs reçoit (906) un message de confirmation pour l'entente de règlement renvoyé par le second noeud de chaîne de blocs, générer le contrat intelligent selon l'entente de règlement, et synchroniser (908) le contrat intelligent avec la chaîne de blocs.

5. Noeud de chaîne de blocs, qui est un second noeud de chaîne de blocs, comprenant :
une première unité de synchronisation, configurée pour synchroniser (701, 913) un premier enregistrement détaillé d'appel original publié par un premier noeud de chaîne de blocs, dans lequel le second noeud de chaîne de blocs est un noeud de chaîne de blocs d'un participant au règlement, et le premier noeud de chaîne de blocs est un noeud de chaîne de blocs d'un initiateur de règlement ;
une première unité de réception, configurée pour recevoir (702, 916) un premier résultat de règlement envoyé par le premier noeud de chaîne de blocs, dans lequel le premier résultat de règlement est obtenu par le premier noeud de chaîne de blocs en traitant le premier enregistrement détaillé d'appel original selon un contrat intelligent, et le contrat intelligent est généré selon une entente de règlement ;
une unité de détermination, configurée pour déterminer (703, 918) le fait de savoir si un résultat calculé selon le contrat intelligent est cohérent avec le premier résultat de règlement ;
une unité d'envoi, configurée pour : lorsque le résultat calculé selon le contrat intelligent est cohérent avec le premier résultat de règlement, envoyer (704, 919) un premier message de confirmation au premier noeud de chaîne de blocs, dans lequel le premier message de confirmation transporte des informations indiquant que le rapprochement sur le premier résultat de règlement a réussi ;
une seconde unité de synchronisation, configurée pour, après que l'unité d'envoi a envoyé le premier message de confirmation au premier noeud de chaîne de blocs, synchroniser (705, 922) le premier résultat de règlement publié par le premier noeud de chaîne de blocs ; et
une seconde unité d'envoi, configurée pour, après que l'unité d'envoi a envoyé le premier message de confirmation au premier noeud de chaîne de blocs, envoyer (706, 926) des données de facture générées sur la base du premier résultat de règlement à un second client, dans lequel le second client est un client du participant au règlement.

6. Noeud de chaîne de blocs selon la revendication 5, dans lequel le noeud de chaîne de blocs est en outre configuré pour :
recevoir (902) une entente de règlement envoyée par le premier client ;
envoyer (903) l'entente de règlement au second client ;
si le second noeud de chaîne de blocs reçoit (905) un message de confirmation pour l'entente de règlement en provenance du second client, renvoyer (906) le message de confirmation pour l'entente de règlement au premier noeud de chaîne de blocs ; et
synchroniser le contrat intelligent publié par le premier noeud de chaîne de blocs.

7. Noeud de chaîne de blocs selon la revendication 5 ou 6, dans lequel l'unité de détermination est spécifiquement configurée pour :
traiter (917) le premier enregistrement détaillé d'appel original selon le contrat intelligent pour obtenir un deuxième résultat de règlement ;
déterminer (918) le fait de savoir si le deuxième résultat de règlement est cohérent avec le premier résultat de règlement ; et
si le deuxième résultat de règlement est cohérent avec le premier résultat de règlement, déclencher le renvoi (919) du premier message de confirmation au premier noeud de chaîne de blocs, dans lequel le premier message de confirmation transporte des informations indiquant que le rapprochement a réussi.

8. Noeud de chaîne de blocs selon la revendication 5 ou 6, dans lequel le noeud de chaîne de blocs comprend également :
une seconde unité de réception, configurée pour : recevoir un second enregistrement détaillé d'appel original envoyé par le second client, et synchroniser le second enregistrement détaillé d'appel original avec la chaîne de blocs.
dans lequel l'unité de détermination est spécifiquement configurée pour :
traiter le second enregistrement détaillé d'appel original selon le contrat intelligent pour obtenir un troisième résultat de règlement ;
déterminer le fait de savoir si le troisième résultat de règlement est cohérent avec le premier résultat de règlement ; et
si le troisième résultat de règlement est cohérent avec le premier résultat de règlement, déclencher le renvoi d'un premier message de confirmation au premier noeud de chaîne de blocs, dans lequel le premier message de confirmation transporte des informations indiquant que le rapprochement sur le premier résultat de règlement a réussi.

9. Produit-programme informatique comprenant une instruction, dans lequel lorsque le produit-programme informatique est exécuté sur un ordinateur, l'ordinateur est activé pour réaliser le procédé selon l'une quelconque des revendications 1 à 2.

10. Support de stockage lisible par ordinateur, comprenant une instruction, dans lequel, lorsque l'instruction est exécutée sur un ordinateur, l'ordinateur est activé pour réaliser le procédé selon l'une quelconque des revendications 1 à 2.
